# EUROPEAN PATENT SPECIFICATION

(11) **EP 1 987 962 B1**
(45) Date of publication and mention of the grant of the patent: **13.07.2011**
(21) Application number: 07737562.4
(22) Date of filing: 22.02.2007
(51) Int. Cl.: B60C 5/14, B32B 25/04, C09J 11/04, C09J 125/08, C09J 153/02

(54) **MULTILAYER BODY AND PNEUMATIC TIRE USING SAME**
MEHRSCHICHTIGER KÖRPER UND LUFTREIFEN, DER DIESEN VERWENDET
CORPS MULTICOUCHE ET PNEU L'UTILISANT

(30) Priority: 23.02.2006 JP 2006046780
(43) Date of publication of application: 05.11.2008
(73) Proprietor: The Yokohama Rubber Co., Ltd., Minato-ku Tokyo 105-8685 (JP)
(72) Inventor: KIRINO, Yoshiaki c/o The Yokohama Rubber Co., Ltd., Hiratsuka-shi, Kanagawa 254-8601 (JP)
(74) Representative: Vossius & Partner
(86) International application number: PCT/JP2007/053844
(87) International publication number: WO 2007/100021

(56) References cited:
- WO-A1-2006/059621
- WO-A1-2006/121140
- JP-A- 11 240 108
- JP-A- 2000 063 572
- JP-A- 2005 068 173
- JP-A- 2007 031 515

## Description

### TECHNICAL FIELD

The present invention relates to a laminate and a pneumatic tire using the same, more specifically relates to a laminate of a thermoplastic elastomer layer and a tackifier/adhesive layer maintaining a high bondability suitable for use as an air barrier layer and a tie rubber layer and/or carcass layer of a pneumatic tire, while improving the weatherability, a laminate between said laminate and an unvulcanized rubber layer, and pneumatic tires using the same.

### BACKGROUND ART

The art of using a film of a thermoplastic resin and thermoplastic elastomer composition for the inner liner (or air permeation preventive layer) of a pneumatic tire is known (see, for example, Japanese Patent Publication (A) No. 10-25375). This film does not have sufficient bondability with the carcass layer and the tie rubber layer (i.e., the cushion material between the carcass layer and the inner liner), and, therefore, it has been proposed to coat, or coextrude, the film with a tackifier/adhesive so as to secure the bondability (see, for example, specification of Japanese Patent No. 3320420 and Japanese Patent Publication (A) No. 11-240108).

As the adhesive usable when producing a laminate of the film thermoplastic elastomer film and the rubber, ESBS (i.e., an epoxy modified styrene-butadiene-styrene block copolymer), a tackifier and a peroxide (or thiuram-based vulcanization accelerator) is utilized. However, materials are being developed for improving the gas barrier property of the thermoplastic elastomer film serving as the inner liner. Along with this, the thermoplastic elastomers per se are being changed to thick and hard materials. Thus, development of new adhesives or bonding methods for taking the place of conventional adhesives has become necessary. Further, if considering outdoor utilization of the laminate and pneumatic tire, improvement of the weatherability is also important.

### DISCLOSURE OF THE INVENTION

Accordingly, an object of the present invention is to solve the problem of securing the bondability and to provide a laminate of a thermoplastic elastomer composition layer (A) and a tackifier/adhesive composition layer (B) or furthermore that laminate on which an unvulcanized rubber layer (C) (e.g., a tie rubber layer and/or carcass layer) is further laminated wherein the weatherability is improved while maintaining the bondability.

In accordance with the present invention, there are provided a laminate comprising:
(A) a thermoplastic elastomer layer comprising a thermoplastic resin, as a matrix, in which a rubber phase having a halogenated isobutylene-isoprene copolymer and/or halogenated isobutylene p-methyl styrene copolymer is dispersed as a polymer ingredient and
(B) a tackifier/adhesive composition layer containing 100 parts by weight of a styrene-based copolymer having a double bond, 30 to 300 parts by weight of a metal oxide and a vulcanizer and/or vulcanization accelerator;
a laminate comprising the above laminate to which (C) an unvulcanized rubber composition layer is further laminated to obtain an integral laminate at the time of vulcanization of the rubber; and

Pneumatic tires using these laminates.

According to the present invention, by using a laminate of (A) a thermoplastic elastomer layer having a halogenated isobutyl-based rubber, as a dispersed phase, and (B) a tackifier/adhesive composition containing a metal oxide (e.g., zinc oxide), it is possible to improve the weatherability, while maintaining a high bondability for the lamination with rubber.

This laminate is effective for an inner liner for a tire utilizing a thermoplastic elastomer film.

### BEST MODE FOR CARRYING OUT THE INVENTION

The inventors proceeded with research to solve the above problem. As the tackifier/adhesive for preparing a laminate comprised of a thermoplastic elastomer film and a rubber, it is known to utilize a composition comprising ESBS, a tackifier and a peroxide (or a thiuram-based vulcanization accelerator). The inventors are also utilizing the same sort of tackifier/adhesive for bonding with the tire side rubber at an inner liner for a tire. When a metal oxide is compounded into the tackifier/adhesive, as a filler, we found that the weatherability of the thermoplastic elastomer utilized, as the tire inner liner, was remarkably improved. When allowed to stand outdoors etc., the halogen compounds released from the "halogenated isobutylene p-methyl styrene copolymer" utilized, as the rubber phase; cause degradation of the material. It is believed that the large amount of metal oxide compounded absorbs the halogen compounds resulting in the improvement of the weatherability.

The laminate according to the present invention is a laminate of (A) a thermoplastic elastomer layer comprising a thermoplastic resin, as a matrix, in which an elastomer of a halogenated isobutylene-isoprene copolymer and/or halogenated isobutylene p-methyl styrene copolymer is dispersed and (B) a tackifier/adhesive composition layer comprising 100 parts by weight of a styrene-based copolymer having a double bond, 30 to 300 parts by weight of a metaloxide and a vulcanizer and/or vulcanization accelerator and, optionally, (C) an unvulcanized rubber composition layer, through which these are laminated. The thermoplastic elastomer composition (A), for example, has an air permeation coefficient (measured by differential pressure method (JIS K7126) at test temperature of 30°C) of 25x10⁻¹² cc·cm/cm²·sec·cmHg or less, preferably 5x10⁻¹² to 15x10⁻¹² cc·cm/cm²·sec·cmHg and a Young's modulus of 1 to 500 MPa, preferably 10 to 300 MPa. The thermoplastic elastomer (A) can be obtained, for example, by extruding at least one type of thermoplastic resin among polyamide-based resins, polyester-based resins, polynitrile-based resins, polymethacrylate-based resins, polyvinyl-based resins, cellulose-based resins, fluorine-based resins, imide-based resins, etc., as a matrix (continuous phase), in which a halogenated isobutylene-isoprene copolymer and/or halogenated isobutylene p-methyl styrene copolymer is dispersed, as an elastomer (rubber phase). Specifically, this can be obtained by melt kneading the thermoplastic resin and the elastomer ingredient, in advance, by a twin-screw kneader etc. to make said elastomer ingredient disperse in the thermoplastic resin forming the continuous phase. When this elastomer ingredient, is vulcanized, a vulcanizer is added, while kneading or a vulcanizer is compounded into the elastomer ingredient, in advance, and the elastomer ingredient is dynamically vulcanized. Further, the various types of compounding agents (except vulcanizer) for the thermoplastic resin and/or the elastomer ingredient may be added during the above kneading, but it is preferable to mix them inside, in advance, before mixing. The mixer used for mixing the thermoplastic resin and the elastomer ingredient is not particularly limited, but a screw extruder, kneader, Banbury mixer, twin-screw kneader, etc. may be mentioned, but among these a twin-screw kneader is preferably used. Note that the method for producing a film of this thermoplastic elastomer composition, etc. is described in further detail in, for example, Japanese Patent Publication (A) No. 8-258506 and other documents. In the present invention as well, the methods described in these documents may be used.

In the thermoplastic matrix in the present invention, as the matrix resin of the thermoplastic elastomer composition (A), in which the elastomer ingredient is dispersed, for example, polyamide-based resins (e.g., Nylon 6 (N6), Nylon 66 (N66), Nylon 46 (N46), Nylon 11 (N11), Nylon 12 (N12), Nylon 610 (N610), Nylon 612 (N612), Nylon 6/66 copolymer (N6/66), Nylon 6/66/610 copolymer (N6/66/610), Nylon MXD6 (MXD6), Nylon 6T, Nylon 6/6T copolymer, Nylon 66/PP copolymer, and Nylon 66/PPS copolymer) and their N-alkoxyalkylates, for example, a methoxymethylate of 6-Nylon, a methoxymethylate of 6-610-Nylon, a methoxymethylate of 612-Nylon, polyester-based resins (e.g., polybutylene terephthalate (PBT), polyethylene terephthalate (PET), polyethylene isophthalate (PEI0), PET/PEI copolymer, polyacrylate (PAR), polybutylene naphthalate (PBN), liquid crystal polyester, polyoxyalkylene diimidic acid/polybutyrate terephthalate copolymer or other aromatic polyesters), polynitrile-based resins (e.g., polyacrylonitrile (PAN), polymethacrylonitrile, acrylonitrile/styrene copolymer (AS), methacrylonitrile/styrene copolymer, methacrylonitrile/styrene/butadiene copolymer), polymethacrylate-based resin (for example polymethyl methacrylate (PMMA), polyethyl methacrylate), polyvinyl-based resin (e.g., vinyl acetate, polyvinyl alcohol (PVA), vinyl alcohol/ethylene copolymer (EVOH), polyvinylidene chloride (PDVC), polyvinyl chloride (PVC), vinyl chloride/vinylidene chloride copolymer, vinylidene chloride/methyl acrylate copolymer, vinylidene chloride/acrylonitrile copolymer), a cellulose-based resin (e.g., cellulose acetate, cellulose acrylate butyrate), a fluorine-based resin (e.g., polyvinylidene fluoride (PVDF), polyvinyl fluoride (PVF), polychlorofluoroethylene (PCTFE), tetrafluoroethylene/ethylene copolymer), imide-based resin (e.g., aromatic polyamide (PI)), etc. may be mentioned. These may be used alone or as any blends thereof.

On the other hand, as the elastomer present, as the dispersed phase, in the thermoplastic elastomer composition (A) of the present invention, as explained above, a halogenated isobutylene-isoprene copolymer (e.g., brominated isobutylene-isoprene copolymer or chlorinated isobutylene-isoprene copolymer) and a halogenated isobutylene p-methyl styrene copolymer (e.g., a brominated isobutylene p-methyl styrene copolymer) etc. may be mentioned. These may be used alone or in any blends thereof.

The styrene-based polymer having double bonds forming the tackifier/adhesive composition (B) of the present invention may be obtained by mixing a tackifier into, for example, any polymer generally used as a tackifier/adhesive polymer for a rubber layer in the past, for example, SBS (styrene-butadiene-styrene block copolymer), SIS (styrene-isoprene-styrene block copolymer), SEBS (styrene-ethylene-butadiene-styrene block copolymer), SIBS (styrene-isoprene-butadiene-styrene block copolymer) or other polymer. These styrene-based polymers having double bonds are preferably partially or wholly epoxy modified for improving the bondability with the thermoplastic elastomer.

Further, if necessary, it is also possible to utilize a blend of an epoxylated polymer and a nonepoxylated polymer. The tackifier usable in the present invention is not particularly limited. A general tackifier may be used, but as specific examples, a terpene resin, modified terpene resin, pinene resin, terpene phenol resin, rosin-based resin, C5-based petroleum resin, C9-based petroleum resin, DCPD-based petroleum resin, styrene-based resin, coumarone resin, alkylphenol resin, etc. may be mentioned. The compounding amount is not particularly limited, but is preferably 10 to 200 parts by weight, more preferably 20 to 100 parts by weight, based upon 100 parts by weight of the styrene-based copolymer having double bonds.

The metal oxide usable in the present invention acts to absorb ultraviolet rays and/or absorb the halogens and halogenated hydrogen released from halogenated butyl rubber due to ultraviolet rays, whereby the degradation of the material due to halogens can be prevented. The type of the metal oxide used is not particularly limited, but a metal relatively high in ionization tendency easily reacts with a hydrogen halide, and, therefore, for example, magnesium oxide, aluminum oxide, zinc oxide, iron oxide, etc. and antimony oxide are also effective. As a metal oxide having an ability to absorb ultraviolet rays, zinc oxide and titanium oxide are effective. Depending on the object, these metal oxides may be utilized mixed in. Furthermore, joint use of carbon black with a high ultraviolet ray absorbing ability is also effective.

The metal oxide used for the tackifier/adhesive composition (B) according to the present invention is mixed in by an amount of 30 to 300 parts by weight, preferably 100 to 300 parts by weight, based upon 100 parts by weight of the styrene-based copolymer having double bonds. If this compounding amount is too small, a sufficient effect of improvement in the weatherability is liable not to be obtained, while if too large, the kneadability will fall, and, therefore, this is not preferable.

The tackifier/adhesive composition (B) used in the present invention contains, in addition to the above essential ingredients, a vulcanizer and/or vulcanization accelerator. As the vulcanizer (cross-linking agent) used in the present invention, any vulcanizer used for vulcanization of rubber in the past, for example, as sulfur-based ones, various types of sulfur (powdered sulfur, precipitated sulfur, insoluble sulfur, etc.), and, as peroxide-based ones, for example benzoyl peroxide, t-butyl hydroperoxide, 2,4-dichlorodibenzoyl peroxide, 2,5-dimethyl-2,5-di(t-butylperoxy)hexane, 2,5-dimethylhexane-2,5-di(peroxybenzoate), etc. may be mentioned.

As the vulcanization accelerator usable in the tackifier/adhesive composition (B) used in the present invention, it is possible to use a general rubber use vulcanization accelerator. Specifically, guanidine-based ones (for example diphenyl guanidine), thiazole-based ones (for example, 2-mercaptobenzothiazole, dibenzothiazyl disulfide), sulfenamide-based ones (for example, N-cyclohexyl-2-benzothiazyl sulfenamide, N-t-butyl-2-benzothiazyl sulfenamide, N,N-dicyclohexyl-2-benzothiazoyl sulfenamide), thiuram-based ones (for example, tetramethyl thiuram disulfide, tetraethyl thiuram disulfide, tetrakis (2-ethylhexyl) thiuram disulfide, tetrabenzyl thiuram disulfide, and their monosulfide compounds), dithio acid salts, thiourea-based ones, etc. may be mentioned.

The mixed amounts of the vulcanizer and/or vulcanization accelerator are not particularly limited, but the compounding of 0.5 to 10 parts by weight based upon 100 parts by weight of styrene-based copolymer is preferable, while mixing 0.5 to 5 parts by weight is more preferable. If less than these mixed amounts, sufficient bondability is liable not to be obtained, while conversely if too high, scorching is liable to occur during the processing.

The unvulcanized rubber composition (C) optionally laminated with the laminate according to the present invention is, for example, a composition containing a diene-based rubber or other rubber ingredient. This composition (C) may be, for example, formed into a sheet and laminated at the (B) layer side of the laminate of the layer (film) of said composition (A) and the layer of the tackifier/adhesive composition (B). This laminate can be directly used for a conventional tire production process as the carcass layer or tie rubber layer of a pneumatic tire.

As the rubber ingredient usable as the unvulcanized rubber composition (C) of the present invention, for example, any diene-based rubber usable for tires etc. may be used. Specifically, various types of natural rubber (NR), various types of polybutadiene rubber (BR), various types of polyisoprene rubber (IR), various types of styrene-butadiene copolymer rubber (SBR), acrylonitrile-butadiene copolymer rubber (NBR), styrene-isoprene copolymer rubber, styrene-isoprene-butadiene copolymer rubber and other diene-based rubber and butyl rubber, halogenated butyl rubber, ethylene-propylene-diene copolymer rubber and other diene-based rubber may be mentioned. These may be used alone or in any blends thereof. As rubber ingredients other than diene-based rubber, ethylene-propylene copolymer rubber, ethylene-octene copolymer rubber, etc. may be used.

The compositions (A), (B) and (C) according to the present invention may have various additives blended into them in addition to the above ingredients such as carbon black, silica and other fillers, vulcanization or cross-linking agents, vulcanization or cross-linking accelerators, various types of oils, antioxidants, plasticizers, and other various types of additives generally blended in for tire use and other rubber composition use. These additives may be compounded by a general method to obtain compositions for use for vulcanization or cross-linking. The compounding amounts of these additives may the conventional general amounts so long as the object of the present invention is not adversely affected.

### EXAMPLES

Examples will now be used to further explain the present invention, but the scope of the present invention is by no means limited to these Examples needless to say.

### Examples 1 to 11 and Comparative Examples 1 to 2

### Preparation of Layer of Thermoplastic Elastomer

### Composition (A)

In the formulation shown in Table I, the compounding agents were charged into a twin-screw kneader, kneaded at the setting temperature of 200°C, extruded into strands of a diameter of about 3 mm and cut into pellets by a strand cutter. This was formed into a sheet shape having a thickness of 0.2 mm by a T-die of a width of 400 mm.

**Table I**

| Thermoplastic resin ingredient | |
|---|---|
| Nylon 6/66 (Amylan CM6001 (made by Toray)) | 40 parts by weight |

| Elastomer ingredient | |
|---|---|
| Br-IPMS (MDX90-10) (made by Exxon Mobil Chemical) | 60 parts by weight |

| Vulcanization ingredients | |
|---|---|
| Zinc Oxide (Zinc White No. 3) (made by Seido Chemical) | 1 part weight |
| Stearic acid (Beads Stearic Acid) (made by NOF Corporation) | 1 part by weight |

### Preparation of Tackifier/Adhesive Composition Sample

In each formulation shown in Table II, the compounding agents were charged into a single-screw kneader/extruder, kneaded at the set temperature of 110°C, extruded into strands of a diameter of approximately 3 mm, and cut into pellets by a strand cutter. These were formed into a sheet shape of a thickness of 0.03 mm by a 400 mm wide T-die.

Examples 1 and 9 are reference compositions.

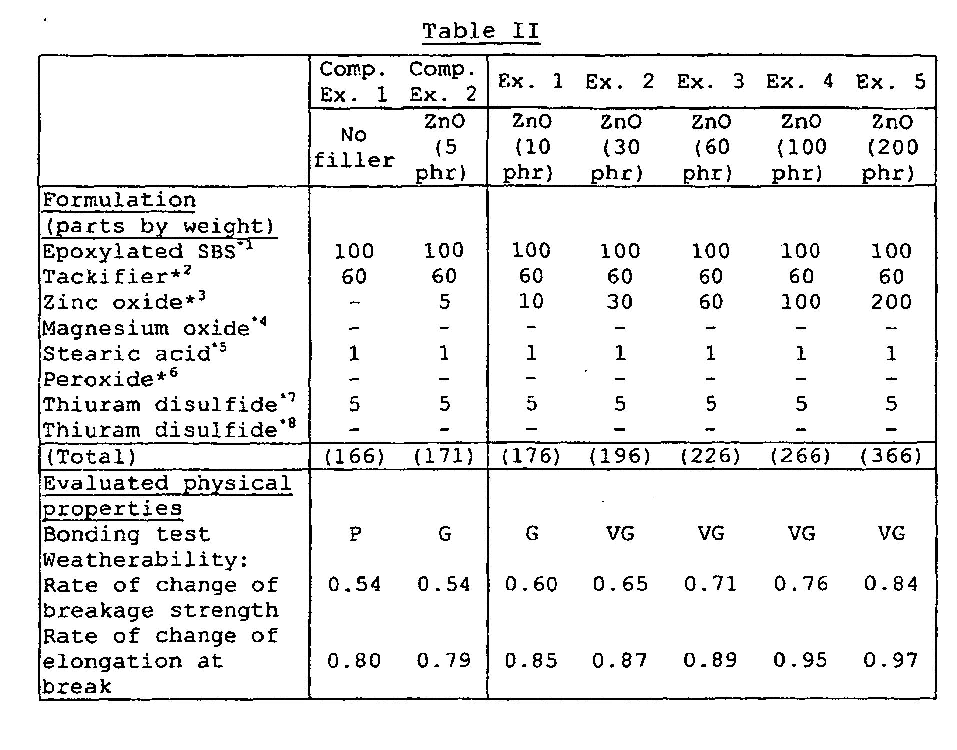

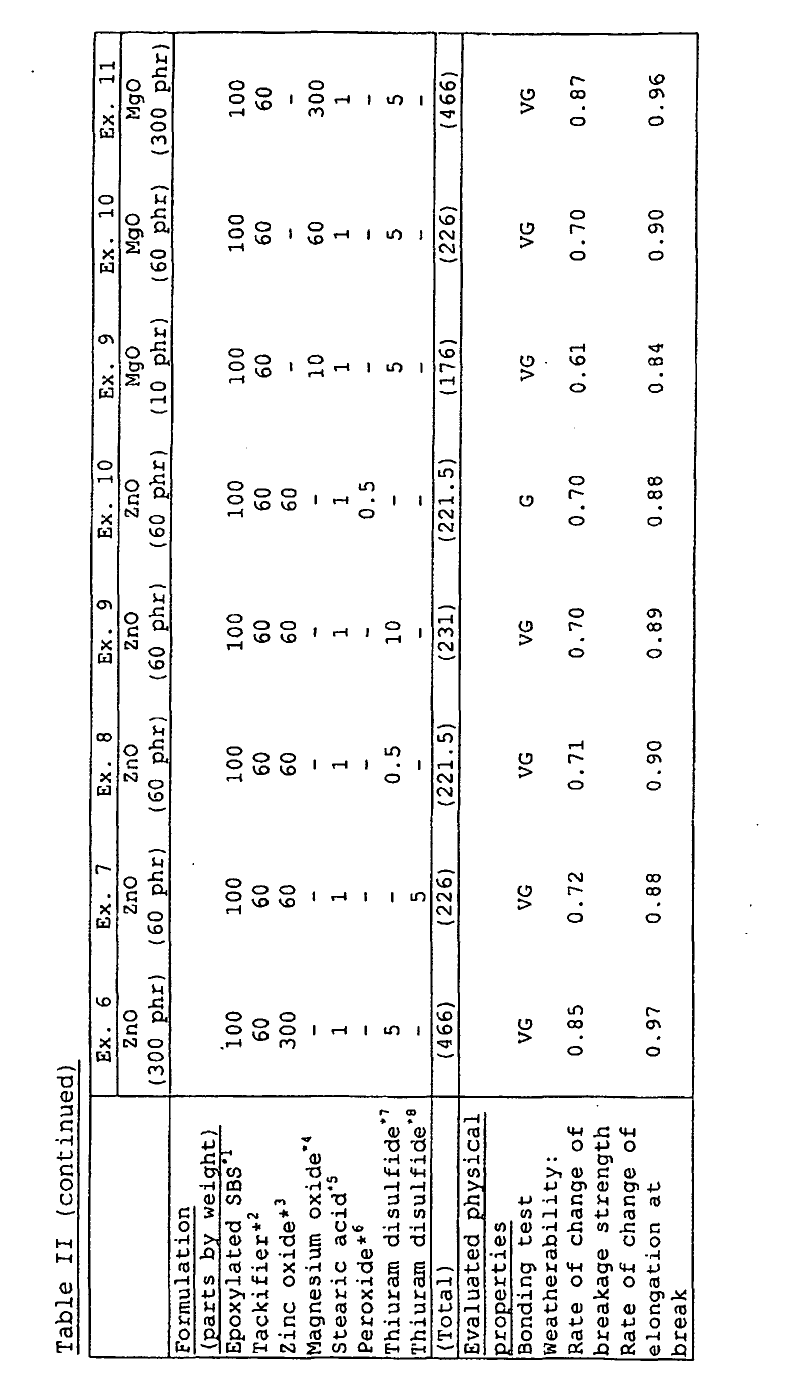

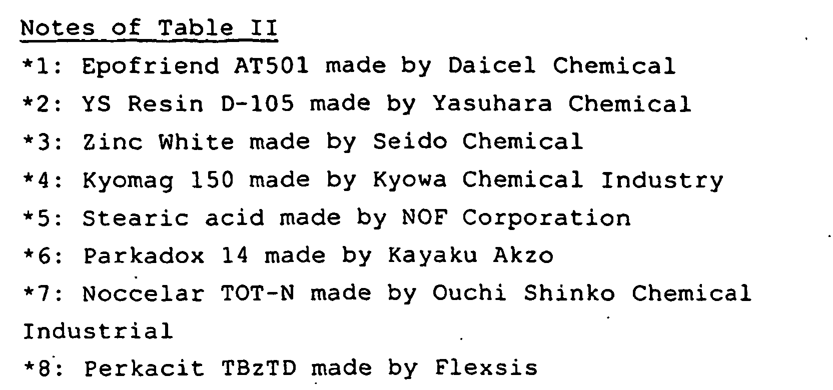

### Preparation of Carcass Rubber Layer

In each formulation shown in Table III, the various compounding agents except for the vulcanizer were kneaded by a 1.7 liter Banbury mixer at a set temperature of 70°C for 5 minutes to obtain a master batch. Next, an 8-inch roll was used to knead in the vulcanizer to obtain a 2 mm thick unvulcanized rubber composition.

**Table III**

| Rubber formulation | Parts by weight |
|---|---|
| NR (RSS#1) | 65 |
| | |
| SBR (Nipol 1502 (Nippon Zeon)) | 20 |
| | |
| BR (Nipol BR1220 (Nippon Zeon)) | 15 |
| | |
| Carbon black (Diablack G (Mitsubishi Chemical)) | 50 |
| | |
| Aromatic oil (Coumorex 300 (Nippon Oil)) | 8 |
| | |
| Zinc oxide (Zinc White No. 3 (Seido Chemical)) | 5 |
| | |
| Antioxidant (Nocrac 224 (Ouchi Shinko Chemical)) | 1 |
| Vulcanization accelerator (Noccelar DM (Ouchi Shinko Chemical)) | 1 |
| Sulfur (Gold Flower brand fine sulfur powder (150 mesh) (Tsurumi Chemical Industry)) | 2 |

### Bonding Test

A composite film of a sheet of a thermoplastic elastomer and a tackifier/adhesive bonded together (thermoplastic elastomer layer: 0.2 mm, bonding layer: 0.03 mm) was bonded with a sheet of unvulcanized rubber of the formulation of Table III (thickness 2 mm), vulcanized at 160°Cx20 minutes, then cut into a strip of a width of 25 mm and length of 100 mm.

A cut was made in the width direction at the center of the thermoplastic elastomer film of this sample.

This was mounted on a DeMattia Crack Tester made by Ueshima Seisakusho at a chuck interval of 60 mm, was repeatedly given continuous tensile strain by a stroke of 10 mm 500,000 times, then was visually examined for peeling of the film from the cut. The following judgment was rendered.
VG (very good): No peeling of film seen at all
G (good): Very small peeling from cut (distance from cut of less than 2 mm) seen (rubber or tackifier/adhesive material destroyed)
P (poor): Large peeling from cut (distance from cut of 2 mm or more) occurs and interfacial peeling occurs

### Weatherability (Rate of Change of Breakage Strength and Rate of Change of Elongation at Break)

A composite film of a sheet of a thermoplastic elastomer and a tackifier/adhesive bonded together (thermoplastic elastomer layer: 0.2 mm, bonding layer: 0.03 mm) was used for an accelerated degradation test of weatherability using a sunshine weather meter (conditions: spray cycle of spraying water for 18 minutes and stopping the spray for 102 minutes repeated under 63°C conditions over 96 hours).

The test pieces before and after treatment were measured by the JIS K6251 method for breakage strength and elongation at break. The values of the measurement values after treatment divided by the measurement values before treatment were used as the rates of change. The closer these values are to 1, the better is the weatherability.

### INDUSTRIAL APPLICABILITY

The laminate of a thermoplastic elastomer composition layer (A) and a tackifier/adhesive composition layer (B) according to the present invention improves the bondability and is superior in weatherability and can give a laminate having a layer of an unvulcanized rubber composition (C), and, therefore, is useful as an air barrier layer of a pneumatic tire.

## Claims

1. A laminate comprising:
(A) a thermoplastic elastomer layer comprising a thermoplastic resin, as a matrix, in which a rubber phase having a halogenated isobutylene-isoprene copolymer and/or halogenated isobutylene p-methyl styrene copolymer is dispersed, as a polymer ingredient, and
(B) a tackifier/adhesive composition layer comprising 100 parts by weight of a styrene-based copolymer having a double bond, a metal oxide and a vulcanizer and/or a vulcanization accelerator, **characterised in that** the compounding amount of the metal oxide is 30 to 300 parts by weight.

2. A laminate as claimed in claim 1, further comprising (C) an unvulcanized rubber composition layer containing a rubber ingredient, which is laminated on the laminate according to claim 1, whereby an integral laminate is obtained at the time of vulcanization of the rubber ingredients.

3. A laminate as claimed in claim 1 or 2, wherein the thermoplastic resin is at least one resin selected from the group consisting of polyamide-based resins, polyester-based resins, polynitrile-based resins, polymethacrylate-based resins and polyvinyl-based resins.

4. A laminate as claimed in claim 2 or 3, wherein the rubber ingredient in the unvulcanized rubber composition is a diene-based rubber.

5. A laminate as claimed in any one of claims 1 to 4, wherein the compounding amount of the metal oxide is 100 to 300 parts by weight.

6. A laminate as claimed in any one of claims 1 to 5, wherein the metal oxide is zinc oxide.

7. A laminate as claimed in any one of claims 1 to 5, wherein the metal oxide is magnesium oxide.

8. A laminate as claimed in any one of claims 1 to 7, wherein at least part of the styrene-based copolymer is an epoxylated styrene-butadiene-styrene tri-block copolymer.

9. A laminate as claimed in any one of claims 1 to 8, wherein the compounding amount of the vulcanizer and/or vulcanization accelerator is 0.5 to 10 parts by weight, based upon 100 parts by weight of the styrene-based copolymer.

10. A laminate as claimed in any one of claims 1 to 9, wherein the vulcanization accelerator of the tackifier/adhesive composition (B) is a thiuram-based vulcanization accelerator.

11. A laminate as claimed in any one of claims 1 to 10, wherein the vulcanizer of the tackifier/adhesive composition (B) is a peroxide.

12. A pneumatic tire comprising a laminate according to any one of claims 1 to 11.

## Patentansprüche

1. Ein Laminat, umfassend:
(A) eine thermoplastische Elastomerschicht, umfassend ein thermoplastisches Harz als eine Matrix, in die eine Kautschukphase mit einem halogenierten Isobutylen-Isopren-Copolymer und/oder halogeniertem Isobutylen-p-Methylstyrol-Copolymer als Polymerbestandteil, dispergiert ist, und
(B) eine Klebrigmacher-/Klebstoff-Zusammensetzungsschicht, umfassend 100 Gewichtsteile eines Copolymers auf Styrolbasis mit einer Doppelbindung, ein Metalloxid und einen Vulkanisator und/oder einen Vulkanisationsbeschleuniger,
**dadurch gekennzeichnet, dass** die beizumischende Menge des Metalloxids 30 bis 300 Gewichtsteile beträgt.

2. Ein Laminat gemäß Anspruch 1, des Weiteren umfassend (C) eine nichtvulkanisierte Kautschukzusammensetzungsschicht, die einen Kautschukbestandteil enthält, die auf das Laminat gemäß Anspruch 1 laminiert ist, wobei zum Zeitpunkt der Vulkanisation der Kautschukbestandteile ein integrales Laminat erhalten wird.

3. Ein Laminat gemäß Anspruch 1 oder 2, wobei das thermoplastische Harz mindestens ein Harz ist, das aus der Gruppe bestehend aus Harzen auf Polyamidbasis, Harzen auf Polyesterbasis, Harzen auf Polynitrilbasis, Harzen auf Polymethacrylatbasis und Harzen auf Polyvinylbasis ausgewählt ist.

4. Ein Laminat gemäß Anspruch 2 oder 3, wobei der Kautschukbestandteil in der nichtvulkanisierten Kautschukzusammensetzung ein Kautschuk auf Dienbasis ist.

5. Ein Laminat gemäß einem der Ansprüche 1 bis 4, wobei die beizumischende Menge des Metalloxids 100 bis 300 Gewichtsteile beträgt.

6. Ein Laminat gemäß einem der Ansprüche 1 bis 5, wobei das Metalloxid Zinkoxid ist.

7. Ein Laminat gemäß einem der Ansprüche 1 bis 5, wobei das Metalloxid Magnesiumoxid ist.

8. Ein Laminat gemäß einem der Ansprüche 1 bis 7, wobei mindestens ein Teil des Copolymers auf Styrolbasis ein epoxyliertes Styrol-Butadien-Styrol Triblock-Copolymer ist.

9. Ein Laminat gemäß einem der Ansprüche 1 bis 8, wobei die beizumischende Menge des Vulkanisators und/oder Vulkanisationsbeschleunigers 0,5 bis 10 Gewichtsteile, bezogen auf 100 Gewichtsteile des Copolymers auf Styrolbasis, beträgt.

10. Ein Laminat gemäß einem der Ansprüche 1 bis 9, wobei der Vulkanisationsbeschleuniger der Klebrigmacher-/Klebstoff-Zusammensetzung (B) ein Vulkanisationsbeschleuniger auf Thiurambasis ist.

11. Ein Laminat gemäß einem der Ansprüche 1 bis 10, wobei der Vulkanisator der Klebrigmacher-/Klebstoff-Zusammensetzung (B) ein Peroxid ist.

12. Ein Luftreifen, umfassend ein Laminat gemäß einem der Ansprüche 1 bis 11.

## Revendications

1. Laminé comprenant:
(A) une couche élastomère thermoplastique comprenant une résine thermoplastique, comme une matrice, dans laquelle une phase de caoutchouc ayant un copolymère d'isobutylène-isoprène halogéné et/ou un copolymère d'isobutylène p-méthyl styrène halogéné est dispersée, comme un ingrédient polymère, et
(B) une couche de composition d'agent poisseux/adhésive comprenant 100 parties en poids d'un copolymère à base de styrène ayant une liaison double, un oxyde métallique et un vulcaniseur et/ou un accélérateur de vulcanisation, **caractérisé en ce que** la quantité de compoundage de l'oxyde métallique représente 30 à 300 parties en poids.

2. Laminé selon la revendication 1, comprenant en outre (C) une couche de composition de caoutchouc non vulcanisée contenant un ingrédient de caoutchouc, qui est laminé sur le laminé selon la revendication 1, moyennant quoi un laminé intégral est obtenu au moment de la vulcanisation des ingrédients de caoutchouc.

3. Laminé selon la revendication 1 ou 2, dans lequel la résine thermoplastique est au moins une résine sélectionnée dans le groupe consistant en résines à base de polyamide, résines à base de polyester, résines à base de polynitrile, résines à base de polyméthacrylate et résines à base de polyvinyle.

4. Laminé selon la revendication 2 ou 3, dans lequel l'ingrédient en caoutchouc dans la composition de caoutchouc non vulcanisée est un caoutchouc à base de diène.

5. Laminé selon l'une quelconque des revendications 1 à 4, dans lequel la quantité de compoundage de l'oxyde métallique représente 100 à 300 parties en poids.

6. Laminé selon l'une quelconque des revendications 1 à 5, dans lequel l'oxyde métallique est l'oxyde de zinc.

7. Laminé selon l'une quelconque des revendications 1 à 5, dans lequel l'oxyde métallique est l'oxyde de magnésium.

8. Laminé selon l'une quelconque des revendications 1 à 7, dans lequel au moins une partie du copolymère à base de styrène est un copolymère tribloc de styrène-butadiène-styrène époxylé.

9. Laminé selon l'une quelconque des revendications 1 à 8, dans lequel la quantité de compoundage du vulcaniseur et/ou de l'accélérateur de vulcanisation représente 0,5 à 10 parties en poids, basée sur 100 parties en poids du copolymère à base de styrène.

10. Laminé selon l'une quelconque des revendications 1 à 9, dans lequel l'accélérateur de vulcanisation de la composition de l'agent poisseux/adhésive (B) est un accélérateur de vulcanisation à base de thiuram.

11. Laminé selon l'une quelconque des revendications 1 à 10, dans lequel le vulcaniseur de la composition d'agent poisseux/adhésive (B) est un peroxyde.

12. Bandage pneumatique comprenant un laminé selon l'une quelconque des revendications 1 à 11.
